(19) Europäisches Patentamt
European Patent Office
Office européen des brevets

(11) **EP 2 693 666 A1**

(12) **EUROPEAN PATENT APPLICATION**
published in accordance with Art. 153(4) EPC

(43) Date of publication:
**05.02.2014 Bulletin 2014/06**

(51) Int Cl.:
***H04B 17/00*** (2006.01)   ***H04B 1/16*** (2006.01)
***H04J 11/00*** (2006.01)

(21) Application number: **12765049.7**

(22) Date of filing: **29.03.2012**

(86) International application number:
**PCT/JP2012/058443**

(87) International publication number:
**WO 2012/133691 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011   JP 2011074495**

(71) Applicants:
• **NEC CASIO Mobile Communications, Ltd.
Kawasaki-shi
Kanagawa 211-8666 (JP)**

• **NTT Docomo, Inc.
Tokyo 100-6150 (JP)**

(72) Inventor: **ISHIDA, Kazuhiro
Kawasaki-shi
Kanagawa 211-8666 (JP)**

(74) Representative: **Vossius & Partner
Siebertstrasse 4
81675 München (DE)**

(54)   **RECEIVING DEVICE, RECEIVING METHOD, AND COMPUTER PROGRAM**

(57)   Provided are a receiving device, receiving method, and computer program such that good precision for signal received power estimation is achieved even during fast fading. The receiving device comprises: a segmenting means for segmenting the period the signal received power of a reception signal, i.e., a received signal, is measured in, according to characteristic values related to the power of the reception signal (for example, SNR); and a calculation means for calculating the RSRP (signal received power) from the power of the channel estimate at each of the segment periods, i.e., the portions that the period was segmented into.

Fig.2

**Description**

{Technical Field}

The present invention relates to a receiving device, a receiving method, and a computer program.

{Background Art}

In a wireless communication system such as Long Term Evolution (LTE), which is attracting attention as a next generation communication method, and being standardized by 3rd Generation Partnership Project (3GPP), it is determined on the basis of receiving quality information, such as Signal Received Power reported from a receiver, whether or not to perform a handover process between base stations. For that processing, in order to perform the handover process with an appropriate base station, it is needed to improve an accuracy level of power estimation at the receiver.

In a conventional method, after a voltage addition in a time-wise direction is done at first with respect to a channel estimation value, frequency-wise averaging is carried out. Then, a conjugate multiplication is performed between neighboring reference signals (RSs), and an in-phase addition is further carried out with respect to a result of the conjugate multiplication, and subsequently Signal Received Power is calculated.

Furthermore, conventionally a receiving device of Orthogonal Frequency Division Multiplexing (OFDM) is also proposed (for example, refer to PTL 1), the receiving device including; a receiving unit for receiving a signal; a first transmission path estimation unit for estimating a transmission path distortion by using a signal of a first time-interval output from the receiving unit; a second transmission path estimation unit for estimating a transmission path distortion by using a signal of a second time-interval output from the receiving unit, the  second time-interval being shorter than the first time-interval; a selection unit for selecting one of a signal from the first transmission path estimation unit and a signal of the second transmission path estimation unit, on the basis of a control signal from a control unit, and outputting the selected signal; and a correction unit for correcting a received signal output from the receiving unit, on the basis of a transmission path estimation signal coming from the selection unit.

{Citation List}

{Patent Literature}

PTL 1: JP2007-329626A

{Summary of Invention}

{Technical Problem}

Unfortunately, in such a conventional method, although the accuracy level under an environment with a low Signal-to-Noise power ratio (SNR) can be improved by elongating a time period for a voltage addition in a time-wise direction, an estimation power becomes less in the case of fast fading, because of an error owing to a rotation element.

Thus, it is an objective of the present invention to provide a receiving device, a receiving method and a computer program that give a solution to the issue described above; and, in other words, which are able to materialize a good level of estimation accuracy of Signal Received Power, even in the case of fast fading.

{Solution to Problem}

In order to give a solution to the issue described above; according to a first aspect of the present invention, provided is a receiving device including: a dividing means for dividing a period for measuring Signal Received Power of a received signal, which is a signal having been received, according to a characteristic value relating to the power of the received signal; and a calculation means for calculating the Signal Received Power according to power of a  channel estimation value of each divided period that is each one of the divided periods.

According to a second aspect of the present invention, provided is a receiving method including: a dividing step for dividing a period for measuring Signal Received Power of a received signal, which is a signal having been received, according to a characteristic value relating to the power of the received signal; and a calculation step for calculating the Signal Received Power according to power of a channel estimation value of each divided period that is each one of the divided periods.

According to a third aspect of the present invention, provided is a computer program to operate a computer for an operation including: a dividing step for dividing a period for measuring Signal Received Power of a received signal, which is a signal having been received, according to a characteristic value relating to the power of the received signal; and a calculation step for calculating the Signal Received Power according to power of a channel estimation value of each divided period that is each one of the divided periods.

{Advantageous Effects of Invention}

According to the present invention, it becomes possible to provide a receiving device, a receiving method and a computer program that are able to materialize a good level of estimation accuracy of Signal Received Power, even in the case of fast fading.

{Brief Description of Drawings}

Fig. 1 is a block diagram showing a configuration of a receiver.
Fig. 2 is a block diagram showing a configuration of an RSRP measuring unit.
Fig. 3 is a flowchart for explaining a process of calculating RSRP.
Fig. 4 is a block diagram showing a configuration example of computer hardware.

{Description of Embodiments}

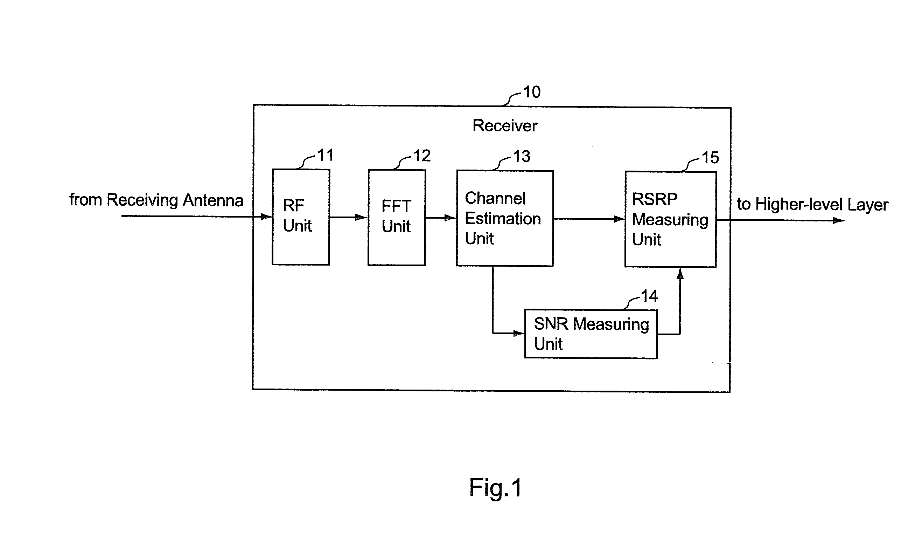

A receiving device according to an embodiment of the present invention is explained below with reference to Fig. 1 through Fig. 4.
The embodiment of the present invention is explained below, by way of using LTE standardized in 3GPP as an example. In this regard, the present invention is not limited to only the system. Incidentally, Signal Received Power to be estimated in the case of LTE is called Reference Signal Received Power (RSRP), and therefore Signal Received Power in the following explanation is called RSRP.
Fig. 1 is a block diagram showing a configuration of a receiver 10, being compliant with LTE, as an example of the receiving device according to an embodiment of the present invention.
The receiver 10 includes an RF unit 11, a Fast Fourier Transform (FFT) unit 12, a channel estimation unit 13, an SNR measuring unit 14, and an RSRP measuring unit 15.
The RF unit 11 A/D-converts a signal received by a receiving antenna (not shown) of the receiver 10. The FFT unit 12 transforms a digital signal obtained as a result of the A/D conversion into a datum of frequency components by way of a Fourier Transform. The channel estimation unit 13 estimates a channel estimation matrix that shows channel status, by using a known signal (Reference Signal) mapped beforehand in a frequency resource, out of the datum of frequency components. The SNR measuring unit 14 estimates a SNR of a transmission path, on the basis of the estimated channel estimation matrix, and notifies the RSRP measuring unit 15 of the estimated SNR. Then, the RSRP measuring unit 15 measures RSRP on the basis of the SNR.

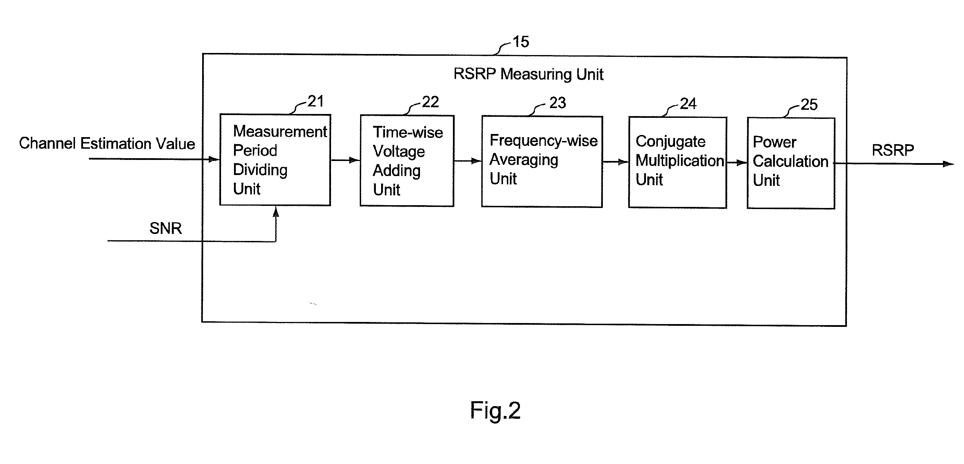

Fig. 2 is a block diagram showing a configuration of the RSRP measuring unit 15. The RSRP measuring unit 15 includes a measurement period dividing unit 21, a time-wise  voltage adding unit 22, a frequency-wise averaging unit 23, a conjugate multiplication unit 24, and a power calculation unit 25.
The measurement period dividing unit 21 divides a period for measuring Signal Received Power of a received signal, which is a signal having been received, according to a characteristic value relating to the power of the received signal (for example, an SNR and the like). The time-wise voltage adding unit 22 adds up power of a channel estimation value of each divided period that is each one of the divided periods, in a time-axis direction. The frequency-wise averaging unit 23 averages a result added up in a frequency-wise direction. The conjugate multiplication unit 24 applies a process of conjugate multiplication to a result averaged in the frequency-wise direction. The power calculation unit 25 calculates RSRP (reference Signal Received Power) on the basis of a result of the conjugate multiplication. In other words, the time-wise voltage adding unit 22, the frequency-wise averaging unit 23, the conjugate multiplication unit 24, and the power calculation unit 25 calculate the RSRP (reference Signal Received Power) on the basis of the power of the channel estimation value of each divided period that is each one of the divided periods.

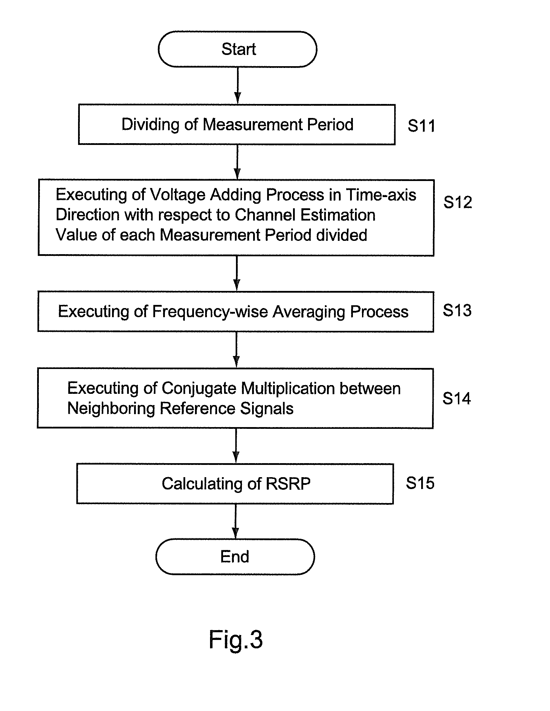

Fig. 3 is a flowchart for explaining a process of calculating RSRP. At Step S11, the measurement period dividing unit 21 divides a measurement period. To describe more in detail, the measurement period dividing unit 21 uses a number 'MH' as the number of divided periods 'M' in the case where the provided SNR is higher than a predetermined threshold 'TSNR,' and meanwhile the measurement period dividing unit 21 uses a number 'ML' as the number of divided periods 'M' in any other case. The number of divided periods 'MH,' and the number of divided periods 'ML' are constants determined in advance. For example, the number of divided periods 'MH' can be 2, and meanwhile the number of divided periods 'ML' can be 1.

Wherein the total number of measurement sub-frames 'N' represents the number of sub-frames that become a measurement object in the measurement period, and a divided measurement unit 'm' is one of 0, 1, - - -, M-1; each start sub-frame number 'STm' and each end sub-frame number 'EDm' are expressed as Formula (1) and Formula (2) show, respectively.

{Math. 1}

$$ST_m = \begin{cases} \lfloor N/M \rfloor + 1 \cdots \text{if } m < N \bmod M \\ \lfloor N/M \rfloor \cdots \text{if } m \geq N \bmod M \end{cases}$$

- - - Formula (1)

{Math. 2}

$$ED_m = \begin{cases} ST_{m-1} - 1 \cdots (m = 0, 1, ..., M-2) \\ N-1 \cdots (m = M-1) \end{cases}$$

- - - Formula (2)

For example, in the case of the total number of measurement sub-frames 'N' = 4 and the number of divided periods 'M' = 2; provided are ST0 = 0, ST1 = 2, ED0 =1, and ED1 =3.

At Step S12, the time-wise voltage adding unit 22 carries out a voltage adding process in a time-axis direction, with respect to a channel estimation value of each measurement period 'm' divided by the measurement period dividing unit 21, as shown in Formula (3); wherein 'a' means a receiving antenna, 'b' means a transmission antenna, 'n' is a sub-frame index (index) in the measurement period, 't' is a time-wise index (index) of an RS in the sub-frame, 'i' is a frequency-wise index (index) of the RS, and 'NRST(m)' is the number of symbols including the RS in the measurement period.
{Math. 3}

$$h_T(m)(a,b,i) = \frac{1}{N_{RST}(m)} \sum_n^{ED_m} \sum_{ST_m} \sum_t h(a,b,n,t,i)$$

- - - Formula (3)

At Step S13, the frequency-wise averaging unit 23 carries out a frequency-wise averaging process with respect to a result after a time-wise in-phase addition, as shown in Formula (4).
{Math. 4}

$$h_{f}(m)(a,b,i) = \begin{cases} h_{T}(m)(a,b,0) & \text{for} \quad i=0 \\ \dfrac{1}{2}\{\, h_{T}(m)(a,b,i\!-\!1) + h_{T}(m)(a,b,i)\,\} & \text{for} \quad i=1...N_{RS}\!-\!1 \\ h_{T}(m)(a,b,N_{RS}\!-\!1) & \text{for} \quad i=N_{RS} \end{cases}$$

$$\text{- - - Formula (4)}$$

Incidentally, the number of Reference Signals 'NRS' represents the number of reference signals included in a band.

At Step S 14, the conjugate multiplication unit 24 performs a conjugate multiplication between neighboring RSs, as shown in Formula (5).
{Math. 5}

$$h_{C}(m)(a,b) = \frac{1}{N_{rs}(m)} \sum_{i=0}^{N_{RS}-2} h_{f}(m)(a,b,i) \times h_{f}(m)(a,b,i)^{*}$$

$$\text{- - - Formula (5)}$$

At Step S15, the power calculation unit 25 calculates RSRP, as shown in Formula (6), and then ends the process of RSRP calculation.
{Math. 6}

$$\text{RSRP} = \frac{1}{N_{rx}N_{tx}} \sum_{a=0}^{N_{rx}-1} \sum_{b=0}^{N_{tx}-1} \sqrt{\left| \frac{1}{M} \sum_{m=0}^{M-1} h_{c}(m)(a,b) \right|^{2}}$$

$$\text{- - - Formula (6)}$$

As described above, if the SNR measured at a terminal is higher than the threshold, the measurement period is divided; and, the voltage addition in a time-wise direction, the frequency-wise averaging process, the conjugate multiplication, and the in-phase addition are carried out with respect to each divided period. Then, a result calculated with respect to each period is further averaged, and subsequently Signal Received Power is calculated. Thus, the time period for the voltage addition before the phase-displacement correction by way of a conjugate multiplication is shortened so that an accuracy level of power estimation can be improved under an environment of fast fading.

Though, the number of divided periods in the above explanation is determined on the basis of an SNR, a thermal noise with its influence degrades the SNR under an environment where a received signal strength indication is low, and therefore the number of voltage additions may be increased in a time-wise direction only in the case of such an environment. Accordingly, an arrangement may be applied in such a way that the number of divided periods 'ML' is chosen when a received signal strength indication (RSSI) measured at a terminal is less than a threshold value, and meanwhile the number of divided periods 'MH' is chosen in any other case. Moreover, when the RSSI is small, a gain set of Auto Gain Control (AGC) becomes large; and therefore, an arrangement may be applied in such a way that the number of divided periods 'ML' is chosen when the gain set value of AGC is greater than a threshold value, and meanwhile the number of divided periods 'MH' is chosen in any other case.

As described above, under an environment where the SNR is low so as to degrade the measurement accuracy, the number of additions in a time-wise direction is increased in a conventional manner in order to sufficiently keep a level of accuracy even in the case of such a  low SNR; and in the meantime, the level of measurement accuracy under an environment of fast fading can be improved.

In other words, by means of changing the time period of voltage addition for the channel estimation value, on the basis of the received signal strength indication or Signal-to-Noise power ratio (SNR), a good level of estimation accuracy of Signal Received Power can be materialized even in the case of fast fading.

The series of processes described above may be executed by means of hardware, and may also be executed by way of software. For executing the series of processes by way of software, a computer program constituting the software is installed into a computer, which is built in exclusive-use hardware, from a recording medium; or the software is installed from a recording medium, for example, into a general-purpose personal computer that can execute various functions with various computer programs being installed.

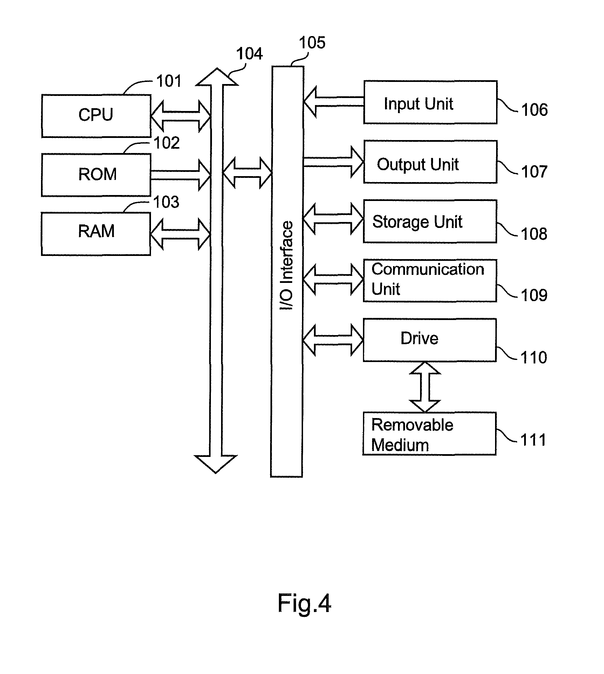

Fig. 4 is a block diagram showing a configuration example of hardware of a computer that executes the series of processes described above by way of a computer program.

In the computer; a central processing unit (CPU) 101, a read only memory (ROM) 102, and a random access memory (RAM) 103 are interconnected by using a bus 104.

Moreover, an I/O interface 105 is connected to the bus 104. Connected to the I/O interface 105 are; an input unit 106 including a keyboard, a mouse, a microphone, and the like; an output unit 107 including a display, a speaker, and the like; a storage unit 108 including a hard disc, a non-volatile memory, and the like; a communication unit 109 including a network interface and the like; and a drive 110 for driving a removable medium 111 such as a magnetic disc, an optical disc, a magnetic optical disc, or a semiconductor memory.

In the computer configured as described above, the CPU 101 loads a computer program, for example, stored in the storage unit 108, to the RAM 103 by way of the I/O interface 105 and the bus 104, and executes the program in order to carry out the series of processes described above.

The computer program to be executed by the computer (the CPU 101) is recorded, for being provided, in the removable medium 111 as a package medium; such as, for example, a magnetic disc (including a flexible disc), an optical disc (Compact Disc - Read Only Memory (CD-ROM), Digital Versatile Disc (DVD), and the like), a magnetic optical disc, or a semiconductor memory; or the computer program is provided via a wired or wireless transmission medium such as a local area network, the Internet, or digital satellite broadcasting.

Then, the computer program can be installed in the computer by way of being stored in the storage unit 108 through the I/O interface 105, while the removable medium 111 being mounted on the drive 110. Alternatively, the computer program can be installed in the computer by way of being stored in the storage unit 108, while being received in the communication unit 109 by the intermediary of a wired or wireless transmission medium. In another way, the computer program can previously be installed in the computer by way of storing the program in advance in the ROM 102 or the storage unit 108.

Incidentally, the computer program to be executed by the computer may be a program with which processes are carried out in chronological order along the sequence explained in this specification document, or may be a program with which processes are carried out in parallel or at the time as required, such as, in response to a call.

Furthermore, an embodiment of the present invention is not limited only to the embodiment described above, and various other variations may be made without departing from the concept of the present invention.

{Reference Signs List}

11. RF unit, 12. FFT unit, 13. channel estimation unit, 14. SNR measuring unit, 15. RSRP measuring unit, 21. measurement period dividing unit, 22. time-wise voltage adding unit, 23. frequency-wise averaging unit, 24. conjugate multiplication unit, 25. power calculation unit, 101. CPU, 102. ROM, 103. RAM, 108. storage unit, 109. communication unit, 111. removable medium

**Claims**

1. A receiving device comprising:

    a dividing means for dividing a period for measuring Signal Received Power of a received signal, which is a signal having been received, according to a characteristic value relating to the power of the received signal; and
    a calculation means for calculating the Signal Received Power according to power of a channel estimation value of each divided period that is each one of the divided periods.

2. The receiving device according to claim 1, further comprising:

    an adding means for adding up the power of the channel estimation value of each divided period, in a time-axis direction;

an averaging means for averaging a result added up, in a frequency-wise direction; and

a conjugate multiplication means for applying a process of conjugate multiplication to a result averaged in the frequency-wise direction;

wherein, the calculation means calculates the Signal Received Power, according to a result of the conjugate multiplication.

3. The receiving device according to claim 1:

   wherein, the characteristic value is any one of a Signal-to-Noise power ratio (SNR), a received signal strength indication, and a gain of auto gain control.

4. A receiving method comprising:

   a dividing step for dividing a period for measuring Signal Received Power of a received signal, which is a signal having been received, according to a characteristic value relating to the power of the received signal; and

   a calculation step for calculating the Signal Received Power according to power of a channel estimation value of each divided period that is each one of the divided periods.

5. A computer program to operate a computer for an operation comprising:

   a dividing step for dividing a period for measuring Signal Received Power of a received signal, which is a signal having been received, according to a characteristic value relating to the power of the received signal; and

   a calculation step for calculating the Signal Received Power according to power of a channel estimation value of each divided period that is each one of the divided periods.

Fig.1

Fig.2

RSRP Measuring Unit — 15

Measurement Period Dividing Unit — 21

Time-wise Voltage Adding Unit — 22

Frequency-wise Averaging Unit — 23

Conjugate Multiplication Unit — 24

Power Calculation Unit — 25

Channel Estimation Value

SNR

RSRP

```
                    ┌─────────────────────┐
                    │        Start        │
                    └─────────────────────┘
                               │
                               ▼
        ┌────────────────────────────────────────┐
        │    Dividing of Measurement Period       │   S11
        └────────────────────────────────────────┘
                               │
                               ▼
    ┌────────────────────────────────────────────────┐
    │ Executing of Voltage Adding Process in Time-axis│   S12
    │ Direction with respect to Channel Estimation    │
    │ Value of each Measurement Period divided        │
    └────────────────────────────────────────────────┘
                               │
                               ▼
    ┌────────────────────────────────────────────────┐
    │  Executing of Frequency-wise Averaging Process  │   S13
    └────────────────────────────────────────────────┘
                               │
                               ▼
    ┌────────────────────────────────────────────────┐
    │  Executing of Conjugate Multiplication between  │   S14
    │  Neighboring Reference Signals                  │
    └────────────────────────────────────────────────┘
                               │
                               ▼
        ┌────────────────────────────────────────┐
        │         Calculating of RSRP            │   S15
        └────────────────────────────────────────┘
                               │
                               ▼
                    ┌─────────────────────┐
                    │         End         │
                    └─────────────────────┘
```

Fig.3

Fig.4

<div align="center">

**INTERNATIONAL SEARCH REPORT**

</div>

| | International application No. |
|---|---|
| | PCT/JP2012/058443 |

**A. CLASSIFICATION OF SUBJECT MATTER**
*H04B17/00*(2006.01)i, *H04B1/16*(2006.01)i, *H04J11/00*(2006.01)i

According to International Patent Classification (IPC) or to both national classification and IPC

**B. FIELDS SEARCHED**

Minimum documentation searched (classification system followed by classification symbols)
H04B17/00, H04B1/16, H04J11/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-248075 A (NTT Docomo Inc.), 02 September 2004 (02.09.2004), paragraph [0012]; fig. 1 (Family: none) | 1,3-5 |
| Y | JP 2005-64947 A (Matsushita Electric Industrial Co., Ltd.), 10 March 2005 (10.03.2005), claim 7; paragraph [0020] (Family: none) | 1,3-5 |
| Y | JP 2010-74390 A (Sharp Corp.), 02 April 2010 (02.04.2010), paragraphs [0008], [0049] (Family: none) | 1,3-5 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 April, 2012 (18.04.12) | 01 May, 2012 (01.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/058443

C (Continuation). DOCUMENTS CONSIDERED TO BE RELEVANT

| Category* | Citation of document, with indication, where appropriate, of the relevant passages | Relevant to claim No. |
|---|---|---|
| P,A | WO 2011/102289 A1 (NEC Corp.), 25 August 2011 (25.08.2011), entire text; all drawings (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007329626 A